# EUROPEAN PATENT SPECIFICATION

(11) **EP 4 306 311 B1**
(45) Date of publication and mention of the grant of the patent: **09.09.2026**
(21) Application number: 22000181.2
(22) Date of filing: 11.07.2022
(51) Int. Cl.: B32B 1/00, B32B 3/14, B32B 5/02, B32B 13/06, B32B 13/14

(54) **BUILDING ELEMENTS COMPRISING REINFORCEMENTS**
BAUELEMENTE, DIE VERSTÄRKUNGEN UMFASSEN
ÉLÉMENTS DE CONSTRUCTION COMPRENANT DES RENFORTS

(43) Date of publication of application: 17.01.2024
(73) Proprietor: Knauf Gips KG, 97346 Iphofen (DE)
(72) Inventor: Iqbal, Arsalan, D-97346 Iphofen (DE); Geiger, Raphael, D-97346 Iphofen (DE); Baese, Rauno, D-97346 Iphofen (DE); Engert, Christian, D-97346 Iphofen (DE)

(56) References cited:
- WO-A1-2015/187831
- US-A- 2 717 420

## Description

The invention refers to building elements made from setting materials, wherein the building elements comprise reinforcement means.

Building elements, like especially walls, masonry etc., often are exposed to high stresses, tensions, forces and the like. Simple wall structures often only can resist limited influences. If the impacts on the building elements become too high, there is a high danger of deformations or breaking of such building elements, which can even lead to a destruction of the whole building of which the building elements are a part.

Therefore, building elements very often are reinforced by including special reinforcing means. The reinforcement of building objects, like walls and masonry, for example, is a well-known technology in the state of the art. In most cases, reinforcement grid, meshes, plates or the like are embedded in the building element (the wall, for example), generally equally aligned (parallel or quasi-parallel) to the areal extension of the building element.

Reinforcement layers embedded in the wall, and arranged essentially parallel to the wall, can, for instance, be realized when the building element is produced by shotcreting or spraying methods. Here, reinforcements often are realized by grids, for example, that are inserted into the material of the building element - like cement or concrete - when this material is still wet (i.e. not yet set), or by spraying the material around the mesh. Afterwards, the material of the building element hardens to build the reinforced wall section.

If impact forces become very high, it is desired to enhance the resistance of building elements. However, for a good resistance against high forces and tensions, the building elements not only have to be strong but should have a certain ductility, to avoid early breaking. This limits the possibility simply to use stronger or thicker grids or plates as reinforcement means, or just to enhance the number of reinforcement elements, since such modifications generally reduce the ductility of the building elements.

It is another desire to improve the resistance of building elements against forces, stresses or tension acting on the building elements from different directions. Until now, it is technically difficult to equip walls or the like with reinforcements that are specially designed to have these properties.

WO 2015/187831 A1 discloses a flexible cementitious composite capable of becoming rigid or semi-rigid. The composite includes a high loft non-woven layer having a first face and second face separated from each other by a space. This non-woven layer includes bulking fibers and a binding material. At least a portion of the bulking fibers and connected to other bulking fibers via the binding material.

US 2 717 420 A discloses a wood product as an article of manufacture and a process for making such wood product. The product can be made from waste lignocellulosic materials. The patent publication further discloses that elongated boards with specific properties can be extruded from a mass of such predominantly lignocellulosic particles containing an adhesive binder.

A quite new method for producing wall sections that has been developed and refined in recent times sections is the 3D-printing technology of suitable materials. A cementitious, settable composition is adapted to be workable for a sufficient time - so that it is printable through a nozzle -, but to harden very fast after being printed. Thus, the wall section is prepared by printing "stripe-shaped" layers, one on top of the other. Reinforcements may be introduced by applying suitable reinforcing materials between desired consecutive layers of the cementitious materials. An example for a method of embedding reinforcements in 3D-printed walls is shown in DE 10 2017 126 345 A. However, such walls often have a limited resistance against impacts that have high components perpendicular to the wall.

Therefore, there is a need for enhancing the strength of areal building elements - such as walls in particular - without badly influencing the ductility properties. Independent of this, but preferably in addition to the aforementioned desire, there is a need for enhancing the resistance of areal building elements- against impacts (forces, stresses, tensions etc.) from at least two spatial directions,
Further, there is the need to find a method to produce said building elements.

The problem arising by the deficiencies of the state of the art could be solved by an areal element, namely an areal building element, according to the main claim. It was found that areal building elements according to the invention had high resistance against external impacts, without great tendency to break (i.e. that they had good ductility properties), and/or that areal building elements according to the invention had an improved resistance against impacts with components from different directions.

The present invention provides a method for producing an areal building element according to the subject matter of independent claim 1.

Subject of the invention is an areal building element, comprising two areal partial elements, each based on a material based on a mineral binder. Each partial element has two main surfaces and one or more side faces. Both partial elements are at least partially arranged in direct or indirect surface contact to each other.

Each of the partial elements comprises at least one reinforcement layer.

The at least one reinforcement layer (hereinafter called the 'first reinforcement layer') of one of the partial elements (hereinafter called the 'first partial element') is arranged in a way that the first reinforcement layer only intersects with the side faces, but not within the main surfaces, of the first partial element, i.e. the first reinforcement layer is arranged essentially equidirectional to the first partial element.

The at least one reinforcement layer (hereinafter called the 'second reinforcement layer') of the other partial element (hereinafter called the 'second partial element') is arranged in a way that the second reinforcement layer intersects with at least one, preferably with both main surfaces of the second partial element. Accordingly, the second reinforcement layer is arranged in a crosswise direction to the main extension of the second partial element (the term "crosswise" does not require, but includes a right-angled arrangement).

The designation as "first" and 'second' reinforcement layer(s) and partial element(s), respectively, is for the purpose of distinction only.

Consequently, the first - equidirectional - reinforcement layer(s) only has/have cross-sections lying within the side faces, but not within the main surfaces, of the first partial element, and the second - crosswise - reinforcement layer(s) has/have cross-sections within one or both of the main surfaces of the second partial element.

The term cross-section also comprises the surfaces (boundary faces) of the respective reinforcement layer.

Preferably, the first - equidirectional - reinforcement layer(s) only has/have side faces that lie within the side faces only lie within the side faces of the first partial element. Also, preferably - alternatively or in addition to the previously mentioned feature - the second - crosswise - reinforcement layer(s) only has side faces of which two lie within the main surfaces of the second partial element, and of which two lie within side faces of the second partial element.

The dependent claims refer to advantageous embodiments of the inventive areal building element. Of course, two or more of the features disclosed for the embodiments can be realized commonly, even if the combination is not explicitly disclosed itself herein, and as far as this does not result in contradictions.

Further claims refer to production methods of the inventive planar building element.

### DEFINITIONS

For the purpose of this document, the term 'areal element' refers to all bodies which can formally be derived from a (planar or curved) surface, but in addition have a certain thickness that is essentially smaller than the extension of the area. The term 'areal element" comprises planar elements as well as curved elements.

Generally, areal elements or, synonymous, areal bodies, like areal building elements, have two identically or similarly shaped surfaces arranged opposite to each other - hereinafter referred to as the 'main surfaces' or synonymously the 'front surfaces' - and at least one area connecting the two main surfaces - hereinafter referred to as the 'side surfaces' or synonymously as the 'side face(s)'. It is also possible - and even not unusual - that the main surfaces somewhat differ in shape and/or dimensions, especially in case of curved areal bodies.

In general, the thickness of areal bodies having two main surfaces is the distance of a point of one main surface to the nearest point of the other main surface. The thickness is not necessarily constant over the extension of the areal body, however, with respect to the invention, areal elements having an essentially constant thickness - i.e. have parallel main surfaces - are preferred.

Here and hereinafter, 'essentially' means within common tolerances of necessity and/or feasibility, e.g. within the scope of production accuracy, if not otherwise defined. For example, for building elements - like walls - an accuracy tolerance of 10 % (i.e. the distances of selected points of one surface to their respective nearest points of the second surface vary by 10 %) still fulfills the requirement of "essentially parallel" surfaces. Preferably, the tolerance is not more than 5 %, more preferably not more than 2 %.

A plane that is characterized as "perpendicular" to a curved line means that the plane is perpendicular to the tangent of the curved line in the intersection point of the plane and the curved line.

Hereinafter, the term 'parallel' is used for lines or areas (geometrical elements) that are arranged essentially equidistant to each other, i.e. where each point of one of the geometrical elements (the first geometrical element) has essentially the same distance to their nearest point of the other geometrical element as the other points of the first geometrical element, independently of the actual shape of the geometrical elements (i.e. the term 'parallel' comprises plan-parallel, curved-parallel etc). For the tolerances, see the preceding paragraph.

If two three-dimensional elements are called 'parallel' to each other, both main surfaces of one of the elements are parallel to both main surfaces of the other element.

The term 'parallel' may also refer only to segments of geometrical elements or parts of three-dimensional elements.

On the one hand, the term 'areal element" comprises planar elements, i.e. objects which extend planar (i.e. without curvature). For the purpose of the invention, the term "planar" does not require an "ideal plane", but tolerances due to the production process are accepted.

Planar elements have two planar main surfaces which generally are essentially parallel to each other. Planar elements are such objects from which the extension in one of the spatial directions (z-direction, perpendicular to the main surfaces, which is in planar elements the thickness) is significantly smaller than its extension in at least one of the other spatial directions that are parallel to the main surfaces and perpendicular to each other; namely x-direction, length and y-direction, width. Especially its extension in z-direction is significantly smaller than its extensions in both other spatial directions x and y. For vertically arranged planar building elements - like wall segments - the width is generally identical to the height of the element.

On the other hand, inventive areal elements also comprise curved elements.

Curved elements may be singly curved, i.e. have a curvature only along one direction, and the main two surfaces are 'ruled surfaces'. Hereinafter, in accordance with the general definition in geometry, a surface is ruled if through every point of the surface there is a straight line that lies on the surface. This means that each of both main surfaces contains a set of straight lines perpendicular to the tangent of the curvature direction in each point of the surface.

The straight lines may be all parallel to each other in the curved element (hereinafter referred to as 'cylindrically singly curved'), or may be arranged non-parallel to each other (hereinafter referred to 'conically singly curved'). According to the definition above, the expression 'cylindrically curved elements' also comprises wavy curved elements, i.e. the curvature line of cylindrically curved elements may have no inflection points (the respective element hereinafter called, or may have one or more inflection points (the respective element hereinafter called. It is explicitly noted that singly curved elements also comprise the closed embodiments, like full cylinder shell elements.

Curved elements may also be doubly curved, i.e. have a curvature in two directions perpendicular to each other of a respective xy-coordinate system (i.e. curvature components in x- and y-directions, the two main surfaces are not ruled surfaces).

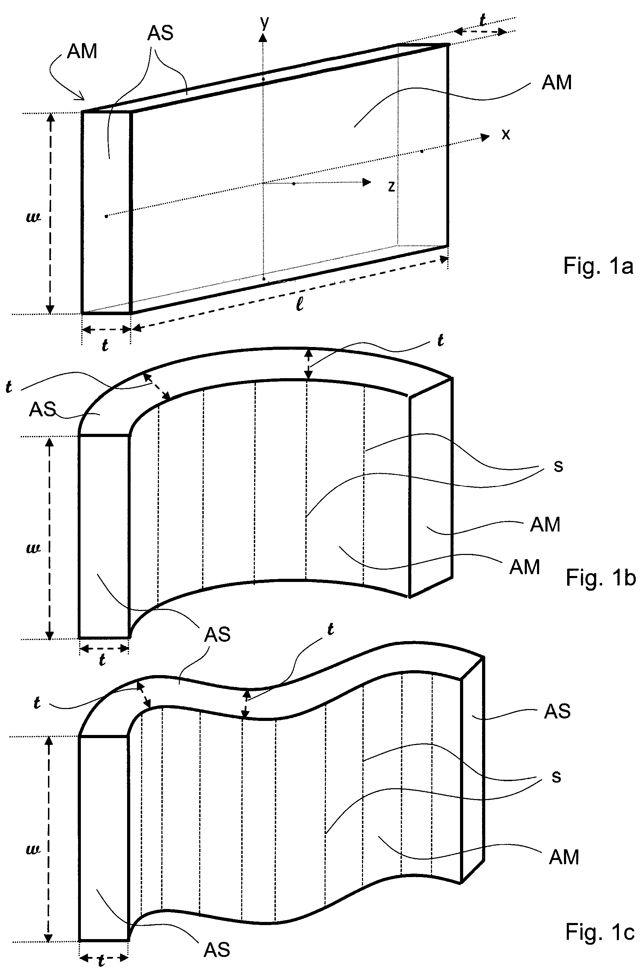

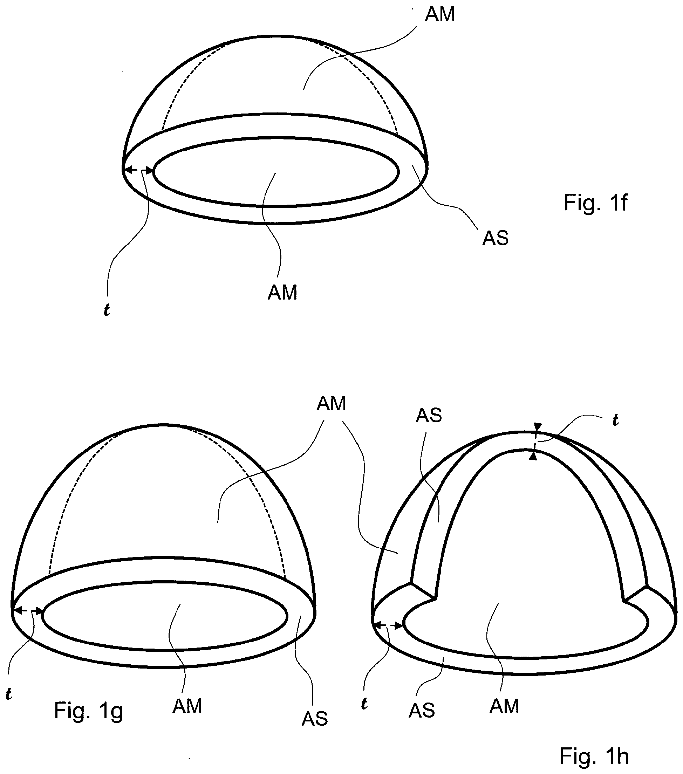

Some curvature principles are generally illustrated by examples in Fig. 1a to 1f. No limitation to special dimensions, surface shapes, thickness properties (constant in the examples) etc. is intended by the chosen examples.
Fig. 1a shows a planar element, having two parallel main surfaces AM and 4 side faces AS, as well as a length ℓ, a width 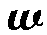 and a thickness ***t***, which can here be brought into line with the x-axis, the y-axis and the z-axis of a Cartesian coordinate system (*x, y, z*).
Fig. 1b shows a cylindrically singly curved element without inflection points in the curvature line, Fig. 1c shows a cylindrically singly curved element with wavy curvature line. Both elements have two curved-parallel main surfaces AM and 4 side faces AS. The two main surfaces each have a set of parallel straight lines s The elements have a constant thickness t and a width (height) 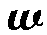 *.*

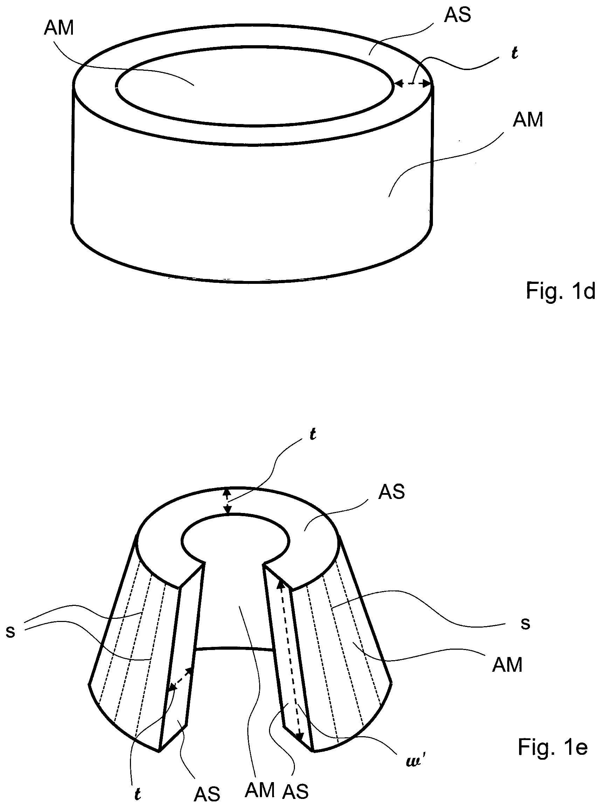

Fig. 1d shows a closed cylinder shell element. According to the invention, instead of the shown regular, circular shape, closed elements with other regular or irregular surface shapes can be realized, too.
Fig. 1e shows a conically singly curved element having two main surfaces AM that are arranged curved-parallel, so that the element also has a constant thickness t.
Fig. 1f to Fig. 1g show examples for doubly curved element segments.

'Building elements' are elements belonging to the building industry, i.e. from or made for the building industry (house building, construction sites, industrial construction etc). An areal building element may be a wall, part of a wall or part of a housing, for example.

A 'layer', as used in this document, means an areal section of a body, that features specific common properties - like, for example, the same material, the same physical properties or the same additives - and that generally differs in this feature from the adjacent areas or sections of the body, or can be distinguished in another way. A layer may be arranged parallel to at least one surface of the body of which it is part, but may be non-parallel to any of the body surfaces in other embodiments (for instance may be arranged obliquely in it). Layers may be essentially planar or curved, and/or preferably have a constant thickness over their extension.

### DETAILED DESCRIPTION

As already mentioned, the areal building element of the invention may especially be planar, cylindrically singly curved, conically singly curved or doubly curved. However, preferably the inventive building element is planar or singly curved, since most walls and wall section of the building or construction industry are realized by these structures.

Examples for cylindrically singly curved areal elements are mantle sections of cylinders or of "generalized" cylinders - wherein the latter means any body having a shape singly curved without an inflection point in the curvature -, e.g. a rounded wall. A further example is an areal element with a wavelike cross-section of the main surfaces (i.e. multiply changing curvature, with one or more inflection points), e.g. a wave-shaped wall.

An example for a conically singly curved areal element is an element shaped as mantle section of a cone or a cone-like structure, like an Indian-tent shaped building element.

Examples for doubly curved building elements are dome-shaped building elements (e.g. a church dome or a segment thereof) or hyperboloids (as often realized for cooling towers, for example).

Examples for planar areal building elements are building boards or walls. It is possible that also length and width differ significantly. Normally the thickness is much smaller than both length and width (height). However, also such objects are comprised by the term "areal element" whose thickness and width are in the same range, but whose length is much bigger, or whose thickness and length are in the same range, but whose width (for vertical standing elements, like walls: the height) is much bigger. Examples are plate sections ("strips") or small wall sections.

An example for a singly curved areal building element is a curved wall, e.g. a wall of a round tower building or a round or oval water tank.

The inventive areal building element is especially suitable in such cases where there is an impact of high forces or pressures, so that a high stability is needed, like on the walls of swimming pools, water basins or tanks for liquids, like water tanks.

Generally, the areal, especially planar, building element may also be used for ceilings of floors.

### Partial elements

According to the invention, the areal building element is composed of at least two segments, namely the partial elements. According to the invention, the two segments are at least partially arranged in direct or indirect contact to each other. Indirect contact means that there could be additional layers between the two partial elements.

Thus the areal building element according to the invention can consist of the two partial elements, so be limited to these, however, it is also possible that there are further layers or partial elements within the areal building element, for instance between the first and the second partial element. Such further layers or partial elements may, each independent from the others, comprise one or more own reinforcement layers, or do not. Such further layers may be anchoring layers, primer layers or barrier layers for certain substances, for example.

'At least partially' in reference to the contact means that there is a (direct or indirect) contact between the whole surface or a part of the surface ("surface area") of one of the partial elements to the whole or a part of the surface of the other partial element. Accordingly, the respective surfaces/surface areas of the partial elements adjoin each other or adjoin a common interlayer section (wherein the interlayer section itself may be composed of one single layer or several - two, three or more - adjoining single layers).

With respect to the invention, such building elements are preferred where there is a (direct or indirect) contact between most of the area of one main surface of one partial element to most of the area of one main surface of the other partial element, more preferred there is a (direct or indirect) contact of the whole respective areas to each other.

Very preferably, the two partial elements are differently produced or manufactured, i.e. built by different methods. The two methods can be proceeded simultaneously or especially sequentially, for instance. For instance, one of the partial elements is produced by 3D printing, and the other partial element is produced by spraying. Further details are given below, see the procedural section of this document.

Preferably, the two partial elements generally have the same shape as the areal building element, but a smaller thickness, to build together the areal building element - if applicable, together with the additional layers. So, in a preferred way, the outer main surfaces of the areal building element and the inner contact surfaces (the main areas of the layers) all have a corresponding surface shape to fit to each other.

Accordingly, preferred in many cases, the areal building element is a sequence of at least two partial elements which both also extend over the entire areal extension of the building element. Also in accordance with the invention, one or both of the partial elements may have smaller areal extensions than the building element, but overlap to build an area of direct or indirect contact.

Even if not necessarily the case, the one or more additional layers, if present, often are very thin, for example in form of a primer layer, an adhesive layer, a protection layer, a barrier layer or the like. One or more additional reinforcement layers - others than those being part of the partial elements - may also be present as additional layers. Preferably, the additional layer(s) each have a thickness of only few centimeters, few millimeters or even less. However, as already mentioned, they also may be thicker.

### Reinforcement layers

Each partial element comprises at least one reinforcement layer, which means that these reinforcement layers are regarded as a being part or section of the respective partial elements. Reinforcement layers consist of or comprise one or more reinforcements means, synonymously referred to as reinforcement elements.

Accordingly, both partial elements comprise - independently of each other - one or more reinforcement layers. Even if hereinafter the plural is used concerning the reinforcement layers of one single partial element, the embodiment with only one single reinforcement layer shall be comprised, as long as it is not explicitly mentioned otherwise.

Preferably, but not mandatory, reinforcement layers have a constant thickness, i.e. two parallel main surfaces. Again, the terms 'constant thickness' and 'parallel' shall not exclude small deviations, e.g. due to the production process.

In cases where the reinforcement element is not a continuous layer itself, like in case of a mesh or a plurality of fibers, the reinforcement layer is the layer built by the outer dimensions of the reinforcement elements, together with the matrix material within these dimensions, in which the element(s) is/are embedded.

In cases where the reinforcement layer is very thin, the side faces are equal to the edges of such a layer, even if the side face areas (edge areas) are very small in such cases.

According to the invention, the first reinforcement layer of the first partial element is arranged such that it's own side faces only lie within the side faces, but not within the main surfaces, of the first partial element, i.e. the first reinforcement layer is arranged essentially equidirectional to the first partial element, hereinafter referred to as the "equidirectional reinforcement".

The second reinforcement layer of the second partial element is arranged in a way that it's side faces lie within the main surfaces of the second partial element, i.e. the second reinforcement layer is arranged in a crosswise direction to the main extension of the second partial element, hereinafter referred to as the "crosswise reinforcement". Generally, this means that there are also side faces of the second reinforcement that lie in side faces of the second partial element.

To further specify the relative position of the equidirectional reinforcement and the crosswise reinforcement layers to each other, one or more angles α can be defined. Since both reinforcements may be curved or otherwise not plane, for each reinforcement layer - the equidirectional and the crosswise one - representative planes have to be found to define such an angle. The angle α then refers to the acute or right intersection angle between such representative planes of both reinforcement layers, which is equal to the acute or right angle between the normal vectors of both representative planes.

At first, for each respective reinforcement, the area is to be found that is composed by such points which nearest distance to one of the main surfaces and whose nearest distance to the other main surface are equal (hereinafter called as the "central area").

Then, for the crosswise reinforcement layer, a fitting plane is to be defined to best represent the central area of the crosswise reinforcement layer, preferably by linear multiple regression (planar regression), method of least squares. In contrast to the central area that is limited by the boundaries of the reinforcement layer, the fitting plane can geometrically be extended beyond the boundaries of the crosswise reinforcement layer, without changing it. This (extended) fitting plane is referred to hereinafter as the "crosswise fitting plane".

The crosswise fitting plane has an intersection line with the central area of the equidirectional reinforcement layer. For each point of this intersection line, there is a tangent plane to the central area of the equidirectional reinforcement layer. Accordingly, for each pair of an equidirectional reinforcement layer in the first partial element and a crosswise reinforcement layer in the second partial element, there is a set of two adjacent angles (each two adjacent angles summarizing to 180 °), along the cutting liner as described before. The smaller of these two adjacent angles (the acute angle) or, if applicable, the right angle, is defined as the angle α.

Advantageously, there is an equidirectional reinforcement layer in the first partial element and a crosswise reinforcement layer in the second partial element such that there is at least one angle α - as defined above - in the range from 45 ° to 90 °, preferably from 75 ° to 90 °, more preferably from 55 ° to 90 °, and very preferred the angle α is equal to 90 ° (with a tolerance 2 °).

More advantageously, there is an equidirectional reinforcement layer in the first partial element and a crosswise reinforcement layer in the second partial element such that the majority of angles α - as defined above - are in the range from 45 ° to 90 °, preferably from 75 ° to 90 °, more preferably from 55 ° to 90 °, and very preferred the angle α is equal to 90 ° (with a tolerance of 2 °).

Most advantageously, there is an equidirectional reinforcement layer in the first partial element and a crosswise reinforcement layer in the second partial element such that all angles α - as defined above - are in the range from 45 ° to 90 °, preferably from 75 ° to 90 °, more preferably from 55 ° to 90 °, and very preferred the angle α is equal to 90 ° (with a tolerance of 2 °).

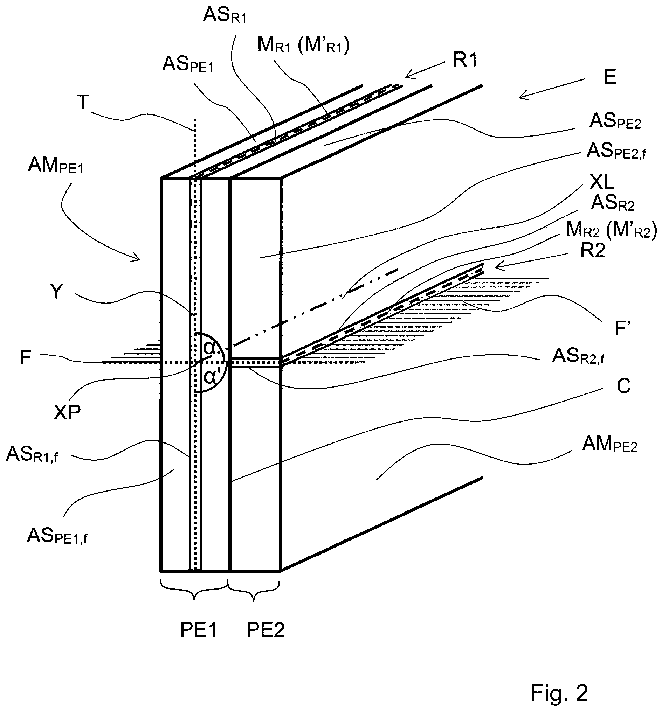

The invention is principally illustrated in Fig. 2 by example of a planar areal building element E in a perspective view. The front side of the building element E is placed in the paper plane. This illustration is not intended to restrict the general idea to the special embodiment shown in Fig. 2.

The areal building element E is composed of two partial elements, the first partial element PE1 and the second partial element PE2. The two partial elements PE1, PE2 are in contact with each other via the contact area C. The first partial element PE1 has two main surfaces AM_{PE1}, one being arranged oblique behind the drawing plane, and one (not indicated with reference number in the drawing) being directed to the contact area C of both partial elements. The partial element PE₁ also has side faces AS_{PE1}. The partial element PE2 also has two main surfaces AM_{PE2}, one (without reference number) again being directed towards the contact area C. According to the drawing, the contact area C is built by the contact of each of a main surface of the two partial elements PE1, PE2 and have direct contact, however, it is also possible - but not shown here - that further layers are arranged between the two partial elements PE1, PE2 at the location of contact area C.

The first partial element PE1 comprises a first reinforcement layer R1 that is arranged within the respective partial layer PE1 such that the side faces AS_{R1} of the first reinforcement layer R1 lie within the side faces AS_{PE1}, AS_{PE1,f} of the first partial element PE1. The first reinforcement layer R1 does not cut the main surfaces AM_{PE1} of the first partial element PE1. In other words, the respective side faces AS_{R1} and AS_{PE1} of the first reinforcement layer R1 and the first reinforcement layer R1 have common cross-sections, but the first reinforcement layer R1 has no common cross-section with the main surfaces AM_{PE1} of the first partial element PE1. The respective first reinforcement layer R1 is an equidirectional reinforcement layer.

The second partial element PE2 comprises a second reinforcement layer R2 that is arranged within the respective partial layer PE2 such that at least some of the side faces AS_{R2} of the second reinforcement layer R2 lie within at least one of the main surfaces A_{M,PE2} of the second partial element PE2, preferably one of the side faces A_{S,R2} of the second reinforcement layer R2 lie within one of the main surfaces AM_{PE2} of the second partial element PE2 and another of the side faces AS_{R2} of the second reinforcement layer R2 lie within the other of the main surfaces A_{M,PE2} of the second partial element PE2. Accordingly, there are common cross-sections of the second reinforcement layer R2 and at least one main surface AM_{PE2} of the second partial element PE2, preferably with both of them. For geometrical reasons, generally one or more of the side faces A_{S,R2} of the second reinforcement layer R2 lie within side faces AS_{PE2} of the second partial element, too. The respective second reinforcement layer R2 is a crosswise reinforcement layer.

For planar building elements with planar reinforcements, as exemplarily shown in Fig. 2, there is a central area M'_{R1} (in Fig. 2 identifiable by its edges M_{R1}) to the first reinforcement layer R1 within the first partial element PE1 which is also planar. The central area M'_{R2} (in Fig. 2 identifiable by its edges M_{R2}) of the second reinforcement layer R2 of the second partial element PE2 in the current example is also planar and lies within it's (extended) fitting plane F'. The central area M'_{R1} of the first reinforcement layer R1 and the fitting plane F' of the second reinforcement layer R2 intersect by building an intersection line XL. There is an intersection point XP of the intersection line XL with the front side face. By point XP, namely lying in the front side face of the building element E, a specific line M_{f} of the central area M'_{R1} (of the first reinforcement layer R1), a tangent T to this specific line M_{f} in the intersection point XP and a specific line F of the fitting plane F' are defined [due to the special geometry of this example, the tangent T is in line with the specific line Y). The angle α then is the acute or right angle between the specific line F of the fitting area F' with the tangent T in point XP. In the present example according to Fig. 2 the angle α = 90 °.

The determination of angle α is exemplarily shown for the front side face, i.e. the "cross-section" through the point XP which is furthest forward on this line XL. However, the angle α can be determined for any cross-section (especially any cross-section that is perpendicular to the intersection line XL) accordingly.

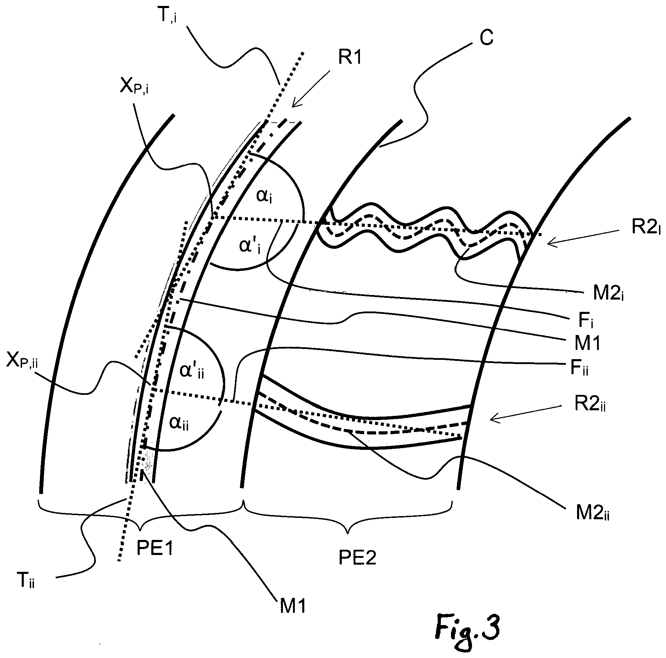

Fig. 3 shows a cross-section of another building element, again without the intention to limit the scope of the invention. The partial element PE1 comprises a curved equidirectional (first) reinforcement layer R1. A central area (visible by line cross-section M1) can be found so that it is equidistant to both surfaces of the reinforcement layer R1. In the partial element PE2, two examples of curved crosswise (second) reinforcement layers R2ᵢ and R2ᵢᵢ are shown (indices i and ii are used for distinction).

The crosswise (second) reinforcement layer R2ᵢ of example i is an irregularly wavy layer. A central area (visible by line in cross-section M2ᵢ) is found so that the nearest distance of each point of this area to one of the surfaces is equal to its distance to the other surface. A line F_{I} belonging to the fitting area to the central area of R2i has an intersection point XPᵢ with the line M1 belonging to the central area of the reinforcement layer R1. In this point XPᵢ, tangent Tᵢ to line M1 and line Fᵢ form a set of two adjacent angles αᵢ and α'ᵢ. The smaller (acute) angle αᵢ (α for example i) is the angle to be used to specify the position of the equidirectional reinforcement layer R1 and the crosswise reinforcement layer R2ᵢ in relation to each other.

The crosswise (second) reinforcement layer R2ᵢᵢ of example ii is a singly curved reinforcement layer. The derivation for the angle α is in accordance to that as given for example i, by just changing the index i to index ii.

A further development of the areal building element according to the invention is characterized by the fact that at least one of the two partial elements comprises more than one reinforcement layers. Two, more than two up to a large number of reinforcement layers can be realized within one partial element. Advantageously, some of them, more advantageously all present reinforcement layers within the respective partial element are arranged essentially parallel to each other. Continuative, both partial elements may comprise more than one reinforcement layers, in particular in a way that some or all of the reinforcement layers of one of the partial elements are arranged parallel to some or all of the other reinforcement layers, respectively, of this partial element, and very preferred that some or all of the reinforcement layers of the other reinforcement layers are also arranged parallel to some or all of the other reinforcement layers, respectively, of this other partial element. The number of reinforcement layers of one of the partial elements may be identical or different to the number of reinforcement layers of the other partial element, the latter case may be structurally conditioned or advantageous due to the different spatial layout of the reinforcement layers in the two partial elements. Often it is realized that there are more crosswise reinforcement layers in the second reinforcement layer than equidirectional reinforcement layers in the first partial element. In the second reinforcement layer.

Building elements according to the invention have a high stability against external forces and stresses. Especially, the arrangement of the reinforcement layers of the partial elements of an areal building element, according to the invention, has the effect of an increased resistance (counterforce) of such building element against the tensile and/or compressive stresses from at least two different directions. Herein, the direction of each tensile or comprehensive stress (i.e. of the respective action of the force or pressure effect) generally refers to the sum vector of the respective effects, since the individual underlying source can exert effects in different spatial directions, and/or to the different vectorial shares of such stresses of a single source.

### Reinforcement elements

Reinforcement layers comprise one or more reinforcement elements. The reinforcement element(s) may be embedded completely in the binder material of the respective partial element (i.e. being an internal component), or it/they may be arranged at the surface of the partial element.

Reinforcement elements can be planar themselves, i.e. in the form of a layer. In some cases, e.g. when the reinforcement layer is a continuous plate, the reinforcement element can build the reinforcement layer; it is also possible that more than one planar element build a reinforcement layer in form of a sequence of reinforcement elements. In other cases, for example when the reinforcement is a (planar) mesh, there is still a matrix material in the interspaces, and the reinforcement layer comprises the reinforcement element (the reinforcement layer is built by the mesh and the matrix).

In other cases, reinforcement elements can be non-planar, e.g. single fibers. Then, in general they are embedded in a matrix to build the reinforcement layer Then, for instance, the reinforcement layer is the sequence of the partial element comprising reinforcement elements, and the adjoining layers of the partial element do not comprise reinforcement elements. Two adjoining reinforcement layers can also be distinguished by "different concentrations" of reinforcement elements, for example.

Preferably, but not mandatory, the matrix material of the reinforcement layer may be the building material of the respective partial element. A main purpose of the reinforcement elements is to increase the strength of the material against tensile and/or compressive stresses. Further properties of the material can be modified, as for example impact, flexural and compressive strength, or ductility, i.e. plastic deformability. In contrast to the normally isotropic properties in the absence of reinforcement elements, anisotropic properties may be introduced also by installing reinforcement layers. Thus, the reinforcements or resistances can be installed where they are needed.

As reinforcing elements of the reinforcement layers of one or both of the partial elements, reinforcement grids, reinforcement meshes and/or reinforcement nets can be chosen, for example. Suitable reinforcement grids or reinforcement nets, respectively, for the present invention advantageously are made of metal - in particular of steel -, carbon composite materials (or referred to shortly as "carbon composite"), biocomposites - such as natural fiber reinforced plastics (NFRP), wood-polymer composites (WPC) -, and/or glass. Also, plastics can be used.

The reinforcing elements of the reinforcement layers of one or both of the partial elements can also be realized by fibers, especially by high tensile fibers. Woven fabrics - like tissues and braidings -, non-woven fabrics - like laid webs, scrims, fleeces and felts - as well as knitted fabrics can be used. Also, the use of single fibers, of a multiplicity of fibers and/or of fiber bundles is possible. Advantageously, high tensile fibers are used. Metal fibers - especially steel fibers -, carbon fibers, carbon composite fibers, plastic fibers, natural fibers - like sisal fibers, jute fibers, coconut fibers, bamboo fibers, hemp fibers and so on - and/or glass fibers can be used.

In case a multiplicity of single reinforcement fibers, which may be in contact or not in contact with each other, the reinforcement layer is built by a areal sequence of the matrix material, in which the fibers are embedded. Laid webs of reinforcement fibers and reinforcement fiber fabrics may be essentially free of the matrix material. It is also possible that they are partially soaked by the matrix material or the building material, respectively - e.g in the edge areas of the reinforcement element - or completely soaked, thus in the latter case, a two-phase-system is present.

Alternatively or in addition, the reinforcement elements may be chosen as rods, especially sets of rods. The rod material may be any material as already disclosed for fibers. A set of rods may, for instance, be composed of a multiplicity of parallel arranged rods, especially having equal distances, and mor preferably arranged in an area or a plane. Rods may also be arranged in two or more sets of rods. Again, in a preferred way, all rods of one reinforcement layer are arranged in an area or a plane. Each set may have a number of parallel, equidistant rods. Further preferred, the single sets of rods may be arranged offset each other.

It is also generally possible to use full-surface plates, foils and the like, for example made from metal, wood, carbon composites, plastics etc. However, to improve the anchorage of the reinforcement element in the matrix, it is often advantageous that the reinforcement element is perforated or has a somewhat interrupted surface, to be better embedded in the matrix (as this is the case with reinforcement grids, nets or fibers. Alternatively, reinforcement elements that are completely extended over the area may be soaked at least in the edge areas by the matrix to improve anchorage. Therefore, if plate shaped reinforcement elements are used, perforated plates or other openwork panels are advantageous. When using full plates or panels, it may be advisable to provide rough surfaces, e.g. by notches and/or elevations such as corrugated patterns, zigzag patterns, houndstooth patterns, etc.

### Binders

In this document, the material based on a mineral binder is also called a 'mineral building material'. According to the invention, both partial elements are based on a mineral building material, which means that they are built from a setting mineral building material.

As preferred for many implementations of the invention, the building materials used for any of both partial elements may be identical. However, it is also possible that the mineral building material used for one of the partial elements differ from the mineral building material used for the other partial element. For example, a different binder can be used, and/or different additives, especially as further defined below, may be admixed. Further, the building materials of the two partial elements may comprise the same components, but could differ in the amounts thereof that are used in the composition.

Similarly, the binder within the reinforcement layers, if present, - the matrix - may generally differ from the rest of the binder of the respective partial element. However, it is very preferred if the matrix binder material of the reinforcement layer(s) of a partial element and the binder material of the rest of the respective partial element, i.e. the segments not being the reinforcement layer, are identical.

Generally, the mineral binder on that the mineral building material of the partial elements is based may be - independently of each other - a non-hydraulic setting binder or a hydraulic setting binder, advantageously gypsum or cement. Non-hydraulic binders are such binders that are able to set in the air but that are not able to set under water. Normally, non-hydraulic binders are soluble or partially soluble in water. Hydraulic binders are able to set in the air as well as under water, they are insoluble in water. However, in hydraulic setting processes as well as in non-hydraulic setting processes, a chemical reaction under participation of water plays a significant role. Without taking any water into account, mineral building components may consist of the mineral binder itself, however in general the mineral binder is admixed with further components or additives to build the mineral building material.

Suitable additives may be added to adjust the process properties and/or the properties of the set product in a desired way. Further components and additives can be chosen from further binders, reactive admixtures (such components are able to take part in the chemical process, but are not able to set in the presence of water when there are no further reaction partners), fillers (volume filling substances not taking part in the setting reaction, but included in the set product, e.g. in particular sand, gravel, etc.), functional additives, which fulfill specific functions in the production process or for the properties of the final product (for example retarders, accelerators, catalysts, thickeners, flame-retardant additives, foaming agents, pigments), and others.

Very advantageous to be used as mineral building agent is cement, also cement admixed with suitable components, fillers and functional additives, like mortar and concrete. Cement and cement mixtures - like mortar and concrete - are commonly also referred to as 'cementitious materials' in this document. Very suitable cementitious materials are extrudable, sprayable and/or three-dimensional printable materials, as reinforcements can be introduced quite easily (see also process chapter of this document). To optimize such cementitious materials, components like retarders may be admixed, to delay the setting of the cementitious material when water is added, and thus to improve the processing time. Alternatively, or preferably in addition to retarders, accelerators may be added at a suitable time, to cancel the effect of the retarders and/or accelerate the setting process otherwise once the cementitious material is ready processed and applied and a dimensionally stable construction of the product is desired. Further suitable mineral, settable materials to be used for the mineral building material of the inventive building element are, for example, clays, loams, limes and slaked limes.

### Further aspects of the invention

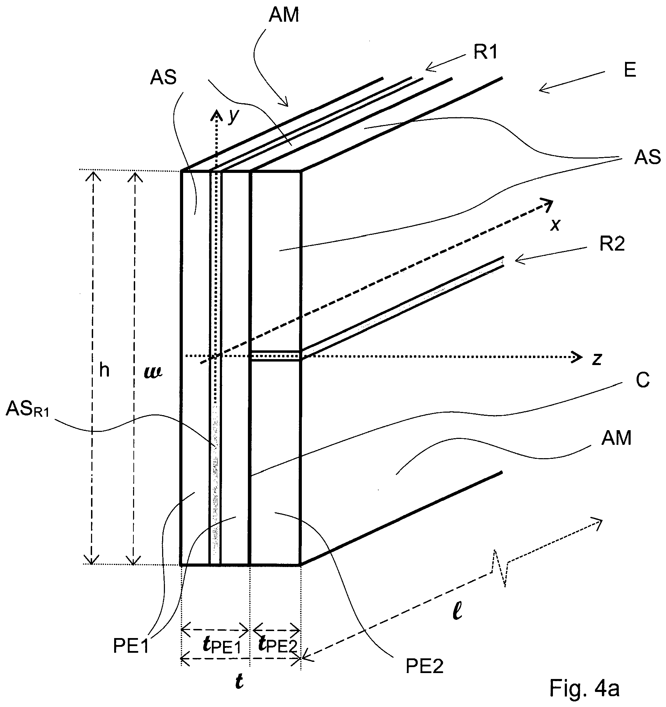

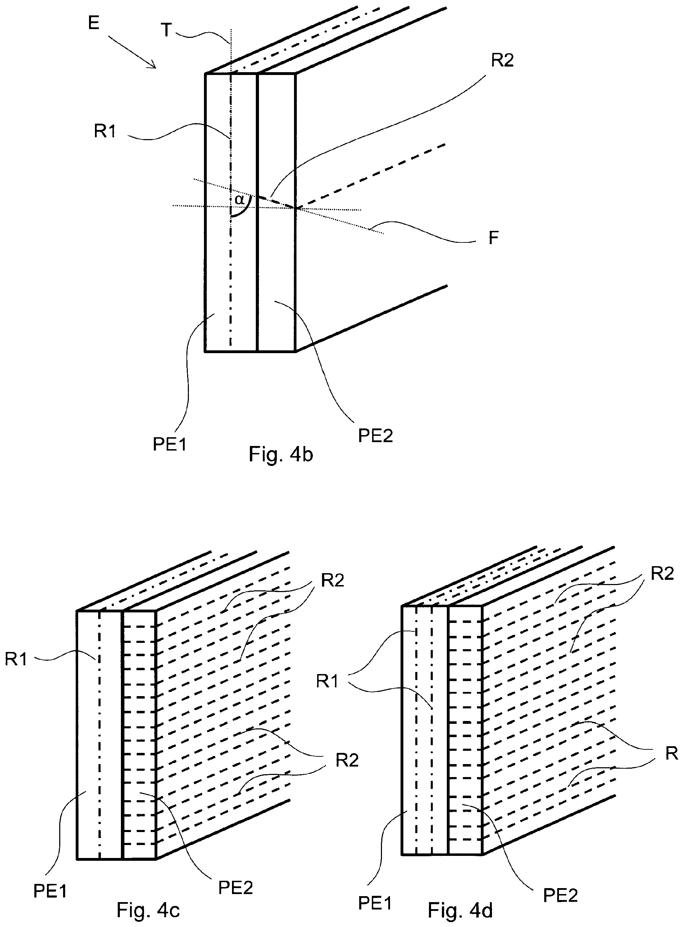

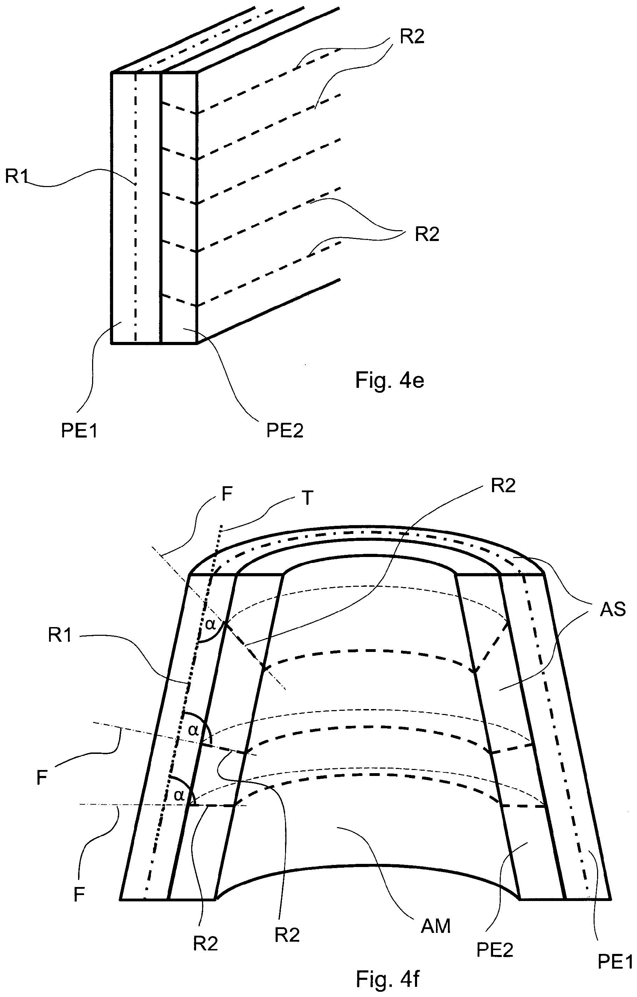

Some further aspects of the invention are illustrated in Fig. 4a - 4f. For reasons of simplicity, the respective equidirectional and crosswise reinforcement layers are just represented by (dotted or broken) lines in some of the figures. These lines can be seen as equivalent to the intersection lines of the respective ventral areas with the respective surfaces.

Fig. 4a shows a planar building element E, for example a planar wall section, in accordance to the element shown in Fig. 2. The element E has two parallel main surfaces AM [one of them not visible since lying in the back] and side faces AS. The element has a length ℓ, a width 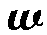 and a thickness t which can here - due to the geometry of this element - be brought into line with the x-axis, the y-axis and the z-axis of a Cartesian coordinate system (*x, y, z*).

In the shown example, namely an upright standing planar element, the width 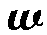 corresponds to the height h of the element.

The building element comprises two partial elements PE1 and PE2, having a certain thickness themselves (***t***_{PE1} , ***t***_{PE2}) and being in areal contact with each other. As shown here, the contact can be direct without intermediate layers, so that there is a common contact area C. However, as disclosed above but not shown here, it is also possible that intermediate layers are arranged between the partial elements PE1 and PE2.

Each of both partial elements PE1, PE2 comprise a reinforcement layer R1, R2 that again have a certain thickness. In the embodiment shown in the figure, the reinforcement layers both are planar. The first reinforcement layer R1 of the first partial element PE1 is arranged in line with its areal extension, and in this embodiment parallel to it. The second reinforcement layer R2 is arranged transverse to the second partial element PE2 of which it is part. Herein, the reinforcement layers RE1 and RE2 are arranged perpendicular to each other (compare Fig. 2).

Fig. 4b shows a similar planar building element. However, in difference to the embodiment of Fig. 4a, the reinforcement layer R2 of the second partial element PE2 - i.e. the crosswise reinforcement layer - is arranged oblique in the partial element, i.e. non-parallel to any of the partial element surfaces. Accordingly, the angle α (the acute angle) between both reinforcement layers RE1 (tangent T; see above) and RE2 (fitting line F, see above) differs from 90 ° (α < 90 °).

Fig 3 shows a building element similar to that of Fig. 1, but with a multiplicity of crosswise reinforcement layers R2 in the respective second partial element PE2. In the first partial element PE1, a single reinforcement layer (1) is shown. The crosswise reinforcement layers R2 are shown parallel to each other and perpendicular to the equidirectional reinforcement layer R1, however, but could also be oblique or non-parallel to each other, for example. The number of reinforcement layers in the corresponding element generally is freely selectable.

Fig. 4d shows a similar building element, but with two reinforcement layers R1 also in the first partial element PE1.

In Fig. 4e, a multiplicity of oblique reinforcement layers R2 in the second partial element PE2 is illustrated.

Fig. 4f shows a conically curved building element comprising two partial elements PE1, PE2. The first - herein the outer - partial element PE1 comprises a equidirectional reinforcement layer R1, and the second - herein the inner - partial element comprises two crosswise reinforcement layers in different orientations. To determine the respective angles α, reference is made to the explanations given above and to the respective reference numbers / letters.

In a preferred embodiment, a planar building element comprises a first partial element with exactly one equidirectional reinforcement layer which is arranged parallel to the main surfaces of the planar building element, and a second partial element with multiple crosswise reinforcement layers which each are perpendicular to the main surfaces of the planar building element. More preferred, the reinforcement element of the equidirectional reinforcement layer (parallel to the main surfaces of the planar building element) is a reinforcement grid, in particular a grid made of metal, e.g. steel, or it is a carbon fiber grid or a carbon fiber textile.

Also preferred, as reinforcement elements of the crosswise reinforcement layers (perpendicular to the main surfaces of the planar building element) also grids made of the aforementioned materials, and/or fibers, fiber scrims and/or fiber fleeces (non wovens) are used, wherein metal fibers, e.g. steel fibers, or carbon fibers are used in particular.

Further preferred, the areal building element consist of these two partial elements, i.e. is limited to these.

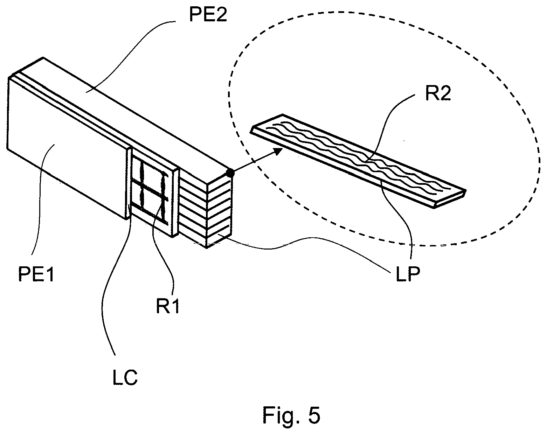

Fig. 5 shows schematically an areal building element according to the aforementioned embodiment: In this specific example, the first partial element PE1 consists of two spray-coated vertical binder material - e.g. cement or concrete - layers LP, embedding a - metal or carbon - mesh as reinforcement element of the first - equidirectional - reinforcement layer R1. The second partial element R2 is built by a sequence of 3D-printed binder material - e.g. concrete or cement - layers LC, one of these layers LC shown separately on the right side of the figure (just for illustration). As second - crosswise - reinforcement layers R2, a layer of metal or carbon fibers are arranged on each printed binder material layer.

In a second preferred embodiment, a singly curved areal building element with curved-parallel main surfaces - especially cylindrically singly curved (without or with inflection points in the curvature line) - comprises a first partial element with exactly one equidirectional reinforcement layer which is also singly curved and has a corresponding shape as the main surfaces of the areal building element - i.e. is also curved-parallel to them -, and a second partial element with multiple crosswise reinforcement layers which each are perpendicular to the tangent planes to the main surfaces of the areal building element at the intersection line of the (fitting planes of the crosswise reinforcement layers (see above) and the main surfaces of the areal building element (and accordingly the central area of the equidirectional reinforcement layer). More preferred, the reinforcement element of the equidirectional reinforcement layer of the first partial element is a reinforcement grid, in particular a grid made of metal, e.g. steel, or it is a carbon fiber grid or a carbon fiber textile. Also preferred, as crosswise reinforcement elements of the crosswise reinforcement layers of the second partial element also grids made of the aforementioned materials, and/or fibers and/or fiber scrims and/or fiber fleeces (non wovens) are used, wherein metal fibers, e.g. steel fibers, or carbon fibers are used in particular. Further preferred, the singly-curved areal building element consist of these two partial elements, i.e. is limited to these.

In a further very preferred embodiment, the areal building element is a wall or part of a wall for a liquid tank, like a water tank, an oil tank, a liquid gas tank or the like. Especially mentioned are water tanks. If applicable, the inner surface of the tank could be protected by a protection layer, depending on the liquid and the material of the building element. The material of the tank, especially of the areal building element, can generally be any material as already disclosed before, for instance concrete.

Such tank walls may be planar (i.e. a tank might be constructed square-shaped or rectangular shaped or otherwise composed of planar walls), with at least one of the walls, preferably all walls of the water tank are planar building elements according to the invention. One or more of the walls or the whole tank might also be realized by singly-curved areal building elements, advantageously cylindrically curved walls, preferably with curved-parallel main surfaces of the areal building element(s).

For example, the cross-section (view from above) of such a water tank may have a regular or irregular rounded form, without, with one, two or more symmetry axis, for example a circle, an ellipse, an oval-rectangular (shape composed of two semicircles, connected by two straight lines) or the like.

The building element comprises one or more equidirectional reinforcement layer in the first partial element. The first partial element is preferably arranged at the outer side of the tank wall. The equidirectional reinforcement layer preferably has a metal grid or mesh, more preferred a carbon grid or mesh as reinforcement element.

The second partial element is preferably arranged at the inner side of the tank and comprises preferably a multiplicity of reinforcement layers. Each of the crosswise reinforcement layers preferably comprise a multiplicity of steel fibers as reinforcement layers.

The binder material of both partial elements preferably is a cement or a cement mixture, for example concrete.

In a very preferred way, the second partial element (comprising the crosswise reinforcement layers) is produced by 3D-printing of single layers, one above the other. The steel fibers may be inserted between the printed binder layers, and/or within them. The first partial element (comprising the equidirectional reinforcement layer(s)) is preferably produced by spray coating, especially by spray-coating around the reinforcement grid or mesh, respectively. The production process is preferably executed as further described below.

### Process

A further aspect of the invention refers to a method to produce the planar building element according to the invention. As far as no technical contradiction results, each of the aforementioned embodiments of the planar building element can be produced herewith.

In a preferred way, the inventive planar building element - e.g. a wall - can be produced by a two-part process, wherein at first one of the two partial elements is produced and thereafter the second partial element. Alternatively, the two parts of the process run at the same time but staggered.

In the first part of the process, a partial element can be produced for example by three-dimensional printing (3D printing), extrusion or spraying of a mineral building material, like gypsum, cement, mortar or concrete. In this process one layer of the mineral building material is produced after the other according to a 3D printing, extrusion or spraying method as known per se, so that a wall or another structure extending into the height is built up. At least after one of the printed or otherwise produced layers one or more reinforcement elements are introduced or put on this layer, for example by pressing in or putting on this layer of building material a reinforcement grid, separate fibers (especially a large number of fibers) or a laid web all over the layer. Herein, all reinforcement layers as already disclosed above can be realized. Thereon, the next layer of mineral building material is printed, extruded or sprayed, respectively, wherein it may happen that the material of the fresh layer partly penetrates into or embeds the previously applied reinforcement layer. By this method, a vertical construction of a partial element of the planar building element - e.g. a wall - takes place, comprising a horizontally arranged reinforcement layer. By introducing the reinforcement element or the reinforcement layer, respectively, before or during the setting time phase of at least the following layer of building material - preferably of both enclosing layers - a very good strength is effected. In an alteration to this process, a reinforcement layer is not only inserted at one single position between two layers of building material, but reinforcement layers are inserted by the described method at several positions. It will result in very stable systems if after printing, extruding or spraying of each layer reinforcement layers are inserted before the next layer of building material is printed, extruded or sprayed. According to this last variant of the inventive method, finally there are reinforcement layers at all positions between two successive layers of building material. If multiple reinforcement layers are inserted, they can all be identical, however, it is also possible to vary the kind of reinforcement layers between the building material layers and create regular or irregular sequences, e.g. to adjust the stability of the whole element.

The first part of the process, i.e. the construction of one of the partial elements by stacking layers on the top of each other, can alternatively be performed by bricking up pre-formed and partially or completely set bricks or blocks or the like. Analogous to the process variant as further described, a first layer is processed, followed by a reinforcement layer and then again by the next layer of the building material. In most cases an additional bonding material - for example an adhering or otherwise fixing material, as an adhesive, a mortar or the like - will be necessary to fix two successive building material layers to each other. Advantageously, such reinforcing elements are inserted into the banding material that can be penetrated by it, for example grids, nets, separate fibers or web laids. If full scale reinforcing elements are chosen, at least one bonding material layer is necessary between the reinforcing layer and one of the building material layers and another bonding material layer between the bonding layer and the other building material layer. Quantity and type of the reinforcement layers can be freely chosen and combined, similar to the printing, extruding and spraying process variants.

In a second part of the construction process, the second partial element can be produced. This can be done by equipping one side of the partial element, which was produced in the first part of the process, with a layer of mineral building material, especially over the whole surface of this side. For example, the new layer can be spread, however, especially suitable is a spraying process, in which the mineral building material that isn't yet set (i.e. that is still liquid or viscous) is sprayed on the first partial element to form a layer. In a preferred way, the same mineral building material is used as for the first partial element. Alternatively, a different building material than for the first partial element is used for second partial element, which is preferably also chosen from the already named advantageous setting mineral building materials (as especially gypsum, cement, mortar, concrete, clay, loam, lime, slaked lime). It is also possible that the mineral building material of the second partial element is composed by the same components as the building material of first partial element, but realizes different amounts of them. Very advantageous, the respective building material of each of the partial elements can be optimized for the specific production method that is used.

One or more reinforcement elements are positioned on the - especially sprayed - layer of mineral building material when it is not yet set, or they are partially or completely embedded therein. Very suitable is, for example, a reinforcement grid, which may be made from a metal, as especially steel, or a grid, a net or a non-woven fabric made from a carbon composite or carbon fiber material. Reinforcement elements having a sufficient inherent stability simplify the vertical mounting, but it is not mandatory to use them. The same is true for a one-piece reinforcement element instead of multiple reinforcement elements, wherein the one-piece reinforcement element may already have the desired dimensions, for example the dimensions of the partial element.

Onto the one or more reinforcement elements a next layer of mineral building material can be spread or sprayed, which can set afterwards.

In the same way, the second partial element can be equipped with more than two layers of mineral building material, wherein one or more reinforcement layers may then be inserted. If multiple layers of building material are realized, it could be advantageous again to insert a reinforcement layer in all contact areas of subsequent layers of building material.

A multilayer design - independently from the actual number of reinforcement layers - of the vertical partial element can especially be advantageous in cases where the partial element shall get a certain thickness, since the construction of multiple (thin) sprayed layers allows to let each layer set or pre-set before the next layer is sprayed. Thus, flowing down of the not readily set, still somewhat fluid building mineral can be omitted or at least reduced.

In an alternative, the second partial element can also be built by pre-produced planes or boards. At first, a layer of boards could be attached to one side of the first partial element by using again a bonding material. Into or onto the bonding material layer one or more reinforcement elements can be positioned, and, if desired or necessary, a second layer of bonding material can be brought on. In cases where the reinforcement elements are completely embedded in the first bonding material layer, a second bonding material layer may be obsolete. Afterwards, a next layer of building material boards is installed. Following the same principle, further layers of boards and, if appropriate, reinforcement layers can be realized.

In a further modification of the inventive process a pre-fabricated board layer is applied on the first partial element by a bonding material, wherein the pre-fabricated board layer already comprises an inserted reinforcement layer.

The two-part procedure can also be carried out overlapping (with a delayed start of the second part), wherein the construction of the second partial element onto the surface of the already built-up part of the first partial element is already started when this first partial element is also still in the construction process. This means that parts of both partial elements are constructed simultaneously, but in shifted positions. Here it is also possible to construct both partial elements by the methods as already explained above.

A further variation of the inventive method comprises a step wherein the first partial element is produced vertically, thus into the height, as described before. When it is - essentially - set, it will be laid onto one of its sides, so that the partial element is essentially horizontally arranged. In a following step (the second part of the process), further layers of mineral building material can be applied on the upper surface of the first partial element to build the second partial element. Between two subsequent building material layers, at several positions between two subsequent layers of the mineral building material, or at all possible positions between two subsequent layers of mineral building material reinforcement layers may be installed as already explained before, wherein any of the methods already disclosed for inserting reinforcement elements may generally be realized. The application of the mineral building material layers of the second partial element can be effected by methods as already described, for example by spraying or by spreading. In this special variant, when the first partial element is arranged vertically, also the 3d-prining of the building material is very well suited. Accordingly, this special variant of the inventive method offers the possibility to construct both partial elements by three-dimensional printing.

### Legend of the figures (reference numbers and reference letters)

E building element
PE1 first partial element of the building element
PE2 second partial element of the building element
R1 reinforcement layer of PE₁
R2 reinforcement layer of PE₂
AM main surface
AS side faces
M' central area of a reinforcement layer
M line of central area lying in a specific area, e.g. in a cross-section
F' fitting plane to central area M'
F line of fitting plane lying in specific area, e.g. in a cross-section
XL intersection line of central area M' and fitting plane F'
XP intersection point of lines M and F; lying on line XL
T tangent to line M in point XP
C contact area between PE₁ and PE₂
LP 3D-printed layer
LC spray-coated layer
x x-axis of Cartesian coordinate system y-axis of Cartesian coordinate system
z z-axis of Cartesian coordinate system
y ℓ length
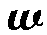 width
***t*** thickness
h height
s straight line (lying in area AM)

### Indices:

- PE1, PE2: referring to / belonging to respective partial element
- R1, R2: referring to / belonging to respective reinforcement layer
- f: referring to / belonging to front side
- i, ii: indices to distinguish different reinforcement layers

## Claims

1. Method to produce an areal building element, the areal building element comprising a first areal partial element and a second areal partial element, each one based on a material based on at least one mineral binder, wherein the first and the second areal partial elements each have two main surfaces arranged opposite to each other and side faces connecting the main surfaces, wherein the first and the second areal partial elements are at least partially arranged in direct or indirect main surface contact to each other, wherein the mineral binder is cement and/or gypsum,
the first areal partial element comprises at least one first reinforcement layer and the second areal partial element comprises at least one second reinforcement layer,
wherein the first reinforcement layer only intersects with the side faces, but not within the main surfaces, of the first areal partial element, and wherein the second reinforcement layer intersects with at least one, preferably with both main surfaces of the second areal partial element,
wherein a multiplicity of essentially vertically arranged layers is produced by three-dimensional printing of the material based on the mineral binder, to build one of the areal partial elements,
wherein at least at the interface of two subsequent vertically arranged layers a reinforcement layer is inserted.

2. Method according to claim1, **characterized in that**
at several interfaces of subsequent vertically arranged layers reinforcement layers are inserted.

3. Method according to claim 2, **characterized in that**
at all interfaces of subsequent vertically arranged layers reinforcement layers are inserted.

4. Method according to any of the preceding claims, **characterized in that**
the produced building element is planar, singly curved or doubly curved.

5. Method according to any of the preceding claims, **characterized in that**
the building element is produced as a wall or as a part of a wall.

6. Method according to claim 5, **characterized in that**
the wall is part of a basin structure, preferably wherein the basin is a liquid basin, a liquid tank, a cistern, a well, a retention basin or a reservoir.

7. Method according to claim 6, **characterized in that**
the wall is part of a basin structure, preferably wherein the basin is a water basin, a water tank, a water well, a water retention basin or a water reservoir.

8. Method according to any of the preceding claims, **characterized in that**
the at least one first reinforcement layer and/or the at least second reinforcement layer comprise or consist of one or multiple reinforcement elements.

9. Method according to claim 8, **characterized in that**
a reinforcement grid, a reinforcement mesh or a reinforcement fabric is used as the reinforcement element.

10. Method according to claim 9, **characterized in that**
the reinforcement element is made of metal - especially of steel -, carbon, carbon composite material or glass, especially glass.

11. Method according to claim 8, **characterized in that**
a multiplicity of separate reinforcement fibers, a laid web of reinforcement fibers or a non-woven fabric of reinforcement fibers is used as reinforcement elements.

12. Method according to claim 11, **characterized in that**
metal fibers - especially steel fibers, carbon fibers, carbon composite fibers and/or glass fibers are used as reinforcement elements.

## Patentansprüche

1. Verfahren zum Herstellen eines flächigen Bauelements, das flächige Bauelement umfassend ein erstes flächiges Teilelement und ein zweites flächiges Teilelement, die jeweils auf einem Material basieren, das auf mindestens einem mineralischen Bindemittel basiert, wobei das erste und das zweite flächige Teilelement jeweils zwei Hauptoberflächen, die zueinander gegenüberliegend angeordnet sind, und Seitenflächen, die die Hauptoberflächen verbinden, aufweisen, wobei das erste und das zweite flächige Teilelement mindestens teilweise in direktem oder indirektem Hauptoberflächenkontakt zueinander angeordnet sind, wobei das mineralische Bindemittel Zement und/oder Gips ist,
das erste flächige Teilelement mindestens eine erste Verstärkungsschicht umfasst und das zweite flächige Teilelement mindestens eine zweite Verstärkungsschicht umfasst,
wobei die erste Verstärkungsschicht nur mit den Seitenflächen, aber nicht innerhalb der Hauptoberflächen des ersten flächigen Teilelements schneidet, und wobei die zweite Verstärkungsschicht mit mindestens einer, vorzugsweise mit beiden Hauptoberflächen des zweiten flächigen Teilelements schneidet,
wobei eine Vielzahl von im Wesentlichen vertikal angeordneten Schichten durch dreidimensionales Drucken des Materials basierend auf dem mineralischen Bindemittel hergestellt wird, um eines der flächigen Teilelemente aufzubauen,
wobei mindestens an der Grenzfläche von zwei aufeinanderfolgenden vertikal angeordneten Schichten eine Verstärkungsschicht eingefügt ist.

2. Verfahren nach Anspruch 1, **dadurch gekennzeichnet, dass**
an mehreren Grenzflächen von aufeinanderfolgenden vertikal angeordneten Schichten Verstärkungsschichten eingefügt sind.

3. Verfahren nach Anspruch 2, **dadurch gekennzeichnet, dass**
an allen Grenzflächen von aufeinanderfolgenden vertikal angeordneten Schichten Verstärkungsschichten eingefügt sind.

4. Verfahren nach einem der vorstehenden Ansprüche, **dadurch gekennzeichnet, dass**
das hergestellte Bauelement planar, einfach gekrümmt oder doppelt gekrümmt ist.

5. Verfahren nach einem der vorstehenden Ansprüche, **dadurch gekennzeichnet, dass**
das Bauelement als Wand oder als Teil einer Wand hergestellt wird.

6. Verfahren nach Anspruch 5, **dadurch gekennzeichnet, dass**
die Wand Teil einer Beckenstruktur ist, vorzugsweise wobei das Becken ein Flüssigkeitsbecken, ein Flüssigkeitstank, eine Zisterne, ein Brunnen, ein Rückhaltebecken oder ein Reservoir ist.

7. Verfahren nach Anspruch 6, **dadurch gekennzeichnet, dass**
die Wand Teil einer Beckenstruktur ist, vorzugsweise wobei das Becken ein Wasserbecken, ein Wassertank, ein Wasserbrunnen, ein Wasserrückhaltebecken oder ein Wasserreservoir ist.

8. Verfahren nach einem der vorstehenden Ansprüche, **dadurch gekennzeichnet, dass**
die mindestens eine erste Verstärkungsschicht und/oder die mindestens zweite Verstärkungsschicht umfassen oder aus einem oder mehreren Verstärkungselementen bestehen.

9. Verfahren nach Anspruch 8, **dadurch gekennzeichnet, dass**
ein Verstärkungsgitter, ein Verstärkungsgewebe oder ein Verstärkungsstoff als Verstärkungselement verwendet wird.

10. Verfahren nach Anspruch 9, **dadurch gekennzeichnet, dass**
das Verstärkungselement aus Metall - insbesondere aus Stahl -, Kohlenstoff, Kohlenstoff-Verbundwerkstoff oder Glas, insbesondere Glas hergestellt ist.

11. Verfahren nach Anspruch 8, **dadurch gekennzeichnet, dass**
eine Vielzahl von separaten Verstärkungsfasern, ein gelegtes Gewebe von Verstärkungsfasern oder ein Vlies von Verstärkungsfasern als Verstärkungselemente verwendet wird.

12. Verfahren nach Anspruch 11, **dadurch gekennzeichnet, dass**
Metallfasern - insbesondere Stahlfasern, Kohlenstofffasern, Kohlenstoffverbundfasern und/oder Glasfasern als Verstärkungselemente verwendet werden.

## Revendications

1. Procédé de production d'un élément de construction surfacique, l'élément de construction surfacique comprenant un premier élément partiel surfacique et un second élément partiel surfacique, chacun à base d'un matériau à base d'au moins un liant minéral, dans lequel les premier et second éléments partiels surfaciques ont chacun deux surfaces principales agencées à l'opposé l'une de l'autre et des faces latérales reliant les surfaces principales, dans lequel les premier et second éléments partiels surfaciques sont au moins partiellement agencés en contact de surface principale direct ou indirect l'un avec l'autre, dans lequel le liant minéral est du ciment et/ou du gypse,
le premier élément partiel surfacique comprend au moins une première couche de renfort et le second élément partiel surfacique comprend au moins une seconde couche de renfort,
dans lequel la première couche de renfort croise uniquement les faces latérales, mais pas au sein des surfaces principales, du premier élément partiel surfacique, et dans lequel la seconde couche de renfort croise au moins l'une, de préférence les deux surfaces principales du second élément partiel surfacique,
dans lequel une multiplicité de couches essentiellement agencées verticalement est produite par impression tridimensionnelle du matériau à base du liant minéral, pour construire l'un des éléments partiels surfaciques,
dans lequel au moins au niveau de l'interface de deux couches ultérieures agencées verticalement, une couche de renfort est insérée.

2. Procédé selon la revendication 1, **caractérisé en ce que**
au niveau de plusieurs interfaces des couches ultérieures agencées verticalement, des couches de renfort sont insérées.

3. Procédé selon la revendication 2, **caractérisé en ce que**
au niveau de toutes les interfaces des couches ultérieures agencées verticalement, des couches de renfort sont insérées.

4. Procédé selon l'une quelconque des revendications précédentes,
**caractérisé en ce que**
l'élément de construction produit est plan, simple courbé ou doublement courbé.

5. Procédé selon l'une quelconque des revendications précédentes,
**caractérisé en ce que**
l'élément de construction est produit en tant que paroi ou en tant que partie d'une paroi.

6. Procédé selon la revendication 5, **caractérisé en ce que**
la paroi fait partie d'une structure de bassin, de préférence dans lequel le bassin est un bassin de liquide, un réservoir de liquide, une citerne, un puits, un bassin de rétention ou un réservoir.

7. Procédé selon la revendication 6, **caractérisé en ce que**
la paroi fait partie d'une structure de bassin, de préférence dans lequel le bassin est un bassin d'eau, un réservoir d'eau, un puits d'eau, un bassin de rétention d'eau ou un réservoir d'eau.

8. Procédé selon l'une quelconque des revendications précédentes,
**caractérisé en ce que**
l'au moins une première couche de renfort et/ou l'au moins une seconde couche de renfort comprennent ou consistent en un ou plusieurs éléments de renfort.

9. Procédé selon la revendication 8, **caractérisé en ce que**
une grille de renfort, un treillis de renfort ou un tissu de renfort est utilisé en tant qu'élément de renfort.

10. Procédé selon la revendication 9, **caractérisé en ce que**
l'élément de renfort est constitué de métal (en particulier d'acier), de carbone, de matériau composite de carbone ou de verre, en particulier de verre.

11. Procédé selon la revendication 8, **caractérisé en ce que**
une multiplicité de fibres de renfort séparées, une bande posée de fibres de renfort ou un tissu non tissé de fibres de renfort est utilisé en tant qu'éléments de renfort.

12. Procédé selon la revendication 11, **caractérisé en ce que**
des fibres métalliques - en particulier des fibres d'acier, des fibres de carbone, des fibres composites de carbone et/ou des fibres de verre sont utilisées en tant qu'éléments de renfort.
